# EUROPÄISCHE PATENTSCHRIFT

(11) **EP 1 948 943 B1**
(45) Veröffentlichungstag und Bekanntmachung des Hinweises auf die Patenterteilung: **05.05.2010**
(21) Anmeldenummer: 06829067.5
(22) Anmeldetag: 17.11.2006
(51) Int. Cl.: F15B 15/10, F16H 63/30, F16D 25/08

(54) **AUTOMATISIERTES SCHALTGETRIEBE UND AUTOMATISIERTE REIBUNGSKUPPLUNG**
AUTOMATED SHIFT TRANSMISSION AND AUTOMATED FRICTION CLUTCH
TRANSMISSION AUTOMATIQUE ET EMBRAYAGE AUTOMATIQUE A FRICTION

(30) Priorität: 19.11.2005 DE 102005055210
(43) Veröffentlichungstag der Anmeldung: 30.07.2008
(73) Patentinhaber: ZF Friedrichshafen AG, 88038 Friedrichshafen (DE)
(72) Erfinder: RONGE, Ludger, 88097 Eriskirch (DE); HAERDTLE, Wilhelm, 88677 Markdorf (DE); SPECK, Frank-Detlef, 88085 Langenargen (DE)
(86) Internationale Anmeldenummer: PCT/EP2006/011024
(87) Internationale Veröffentlichungsnummer: WO 2007/057197

(56) Entgegenhaltungen:
- EP-A2- 1 302 706
- EP-B1- 0 161 750
- WO-A-2004/055390
- JP-A- 2 150 501
- JP-A- 60 227 027
- US-B1- 6 349 746

## Beschreibung

Die Erfindung betrifft ein automatisiertes Schaltgetriebe, insbesondere ein mehrstufiges Kraftfahrzeug-Schaltgetriebe, mit mindestens einem steuerbaren Stellantrieb, der als Gangsteller zum Ein- und Auslegen einer Gangstufe des Schaltgetriebes oder als Kupplungssteller zum Ein- und Ausrücken einer zugeordneten automatisierten Motorkupplung vorgesehen ist. Die EP 1 302 706 A2 zeigt ein automatisiertes Schaltgetriebe gemäß dem Oberbegriff des Anspruchs 1.

Die Erfindung betrifft des weiteren eine automatisierte Reibungskupplung, insbesondere eine in einem Kraftfahrzeug-Antriebsstrang zwischen einem Antriebsmotor und einem Getriebe angeordnete automatisierte Motorkupplung, mit einem steuerbaren Stellantrieb, der als Kupplungssteller zum Ein- und Ausrücken der Reibungskupplung vorgesehen ist. Die JP 02 150 501 A zeigt eine automatisierte Reibungskupplung gemäß dem Oberbegriff des Anspruchs 2.

In Kraftfahrzeugen kommen sowohl im PKW-Bereich als auch im Nutzfahrzeugbereich zunehmend automatisierte Schaltgetriebe zur Anwendung, da diese bei relativ geringem Gewicht, kompakten Abmessungen und einem hohen Getriebewirkungsgrad wegen der automatisiert ablaufenden Schaltvorgänge einen hohen Bedienungskomfort aufweisen sowie unter Nutzung entsprechender Eco-Schaltsteuerungsprogramme einen geringen Kraftstoffverbrauch der betreffenden Kraftfahrzeuge ermöglichen. Dem jeweiligen automatisierten Schaltgetriebe ist antriebsseitig als Motorkupplung eine automatisierte, zumeist als eine Einscheiben-Trockenkupplung ausgebildete Reibungskupplung zugeordnet, die bei Anfahr- und Schaltvorgängen durch einen zugeordneten Kupplungssteller automatisiert ein- oder ausgerückt wird.

Ebenfalls sind so genannte halbautomatische Getriebe bekannt, bei denen die Gangwechsel über entsprechende Schaltbetätigungs- und Schaltübertragungselemente, wie Schalthebel, Schaltgestänge und getriebeinteme Schaltwellen sowie Schaltstangen, unmittelbar von dem Fahrer durchgeführt werden, wogegen die antriebsseitig vorgelagerte Motorkupplung über einen Kupplungssteller koordiniert zu dem Schaltvorgang automatisiert betätigt, also ausgerückt oder eingerückt wird.

Als Stellantriebe kommen bislang vorwiegend hydraulische oder pneumatische Stellzylinder sowie elektromotorische oder elektromagnetische Antriebe zur Anwendung. Über zugeordnete Magnetventile gesteuerte druckmittelbetätigbare Stellzylinder sind zwar erprobt und ausgereift, sie weisen aber prinzipbedingt aufgrund einer Vorbefüllungsphase und einer langen Signalkette von dem zugeordneten elektronischen Steuergerät über das Magnetventil zu dem betreffenden Stellzylinder ein relativ schlechtes Ansprechverhalten auf, welches ungünstig für die Steuerung schneller Stellvorgänge sein kann.

Elektrische Stellantriebe weisen zwar grundsätzlich ein schnelleres Ansprechverhalten auf, sie sind aber aufgrund eines durch die Magnetisierung bedingten ausgeprägten Hystereseverhaltens für schnelle Wechsel der Bewegungsrichtung nicht geeignet. Allen diesen Bauarten von Stellantrieben ist gemeinsam, dass sie relativ schwer sind, aufgrund vieler feinmechanischer Bauteile hohe Herstellungskosten verursachen und aufgrund reibungsbehafteter Lauf- und Dichtungsflächen und/oder Drehlager verschleißbedingt eine beschränkte Lebensdauer aufweisen sowie einen gewissen Wartungs- und Reparaturaufwand erfordern.

Vor diesem Hintergrund liegt der vorliegenden Erfindung die Aufgabe zugrunde, einen Stellantrieb eines automatisierten Schaltgetriebes und einer automatisierten Reibungskupplung vorzuschlagen, der bei einfachem und kostengünstigem Aufbau ein verbessertes Steuerungsverhalten und eine erhöhte Lebensdauer aufweist.

Die Lösung dieser Aufgabe wird gemäß den Merkmalen des Anspruchs 1 erreicht durch ein automatisiertes Schaltgetriebe mit mindestens einem steuerbaren Stellantrieb, der als Gangsteller zum Ein- und Auslegen einer Gangstufe des Schaltgetriebes oder als Kupplungssteller zum Ein- und Ausrücken einer zugeordneten automatisierten Motorkupplung vorgesehen ist. Außerdem ist vorgesehen, dass der Stellantrieb als ein pneumatischer Muskel mit einem Schlauchkörper aus einem fluidisch dichten und elastischen Material, mit einem im Außenbereich an dem Schlauchkörper angeordneten Gittergeflecht aus zugfesten Fasern und mit den Schlauchkörper axial endseitig verschließenden Endstücken ausgebildet ist.

Die Lösung der Aufgabe die automatisierte Reibungskupplung betreffend ist gemäß den Merkmalen des Anspruchs 2 durch eine automatisierte Reibungskupplung gegeben, mit einem steuerbaren Stellantrieb, der als Kupplungssteller zum Ein- und Ausrücken der Reibungskupplung dient, wobei der Stellantrieb als ein pneumatischer Muskel mit einem Schlauchkörper aus einem fluidisch dichten und elastischen Material, mit einem im Außenbereich an dem Schlauchkörper angeordneten Gittergeflecht aus zugfesten Fasern und mit den Schlauchkörper axial endseitig verschließenden Endstücken ausgebildet ist.

Das Gittergeflecht an den Schlauchkörpern ist dabei jeweils vorzugsweise rautenförmigen ausgebildet.

Der pneumatische Muskel, auch englischsprachig häufig als Fluidic Muscle bezeichnet, ist seit längerem an sich bekannt. Beispielhaft wird hier auf die EP 0 161 750 B1 der Fa. Bridgestone und auf Publikationen und Produktbeschreibungen der Fa. Festo ("Pneumatischer Muskel arbeitet wie echt", Technische Rundschau 2, 2003, Seite 12) verwiesen. Derartige pneumatische Muskeln sind jedoch bislang im Kraftfahrzeug-Bereich nicht zur Anwendung gekommen. Bei einer Verwendung eines entsprechend öl- und benzinbeständigen Elastomer-Kunststoffes für die Schlauchkörper steht aber einem Einsatz von pneumatischen Muskeln in Kraftfahrzeugen nichts im Wege.

Die Funktion des pneumatischen Muskels beruht darauf, dass mit einem in den Schlauchkörper einströmenden Druckmittel, wie beispielsweise Druckluft, sich dieser radial ausdehnt und durch die Wirkung der relativ dehnungsarmen Fasern des Gittergeflechtes axial verkürzt wird. Durch diesen Effekt kann über eine geregelte Zufuhr des Druckmittels eine vergleichsweise große Zugkraft erzeugt werden, die diejenige eines vergleichbar großen Pneumatik-Stellzylinders bei weitem übertrifft.

Hinzu kommt, dass der pneumatische Muskel weitgehend reibungsfrei arbeitet und somit ein sehr gutes Ansprechverhalten ohne Ruckgleiten (stickslip) aufweist. Da keine reibungsbehafteten Gelenklager und Dichtungsflächen vorliegen, ist der pneumatische Muskel im Betriebseinsatz völlig wartungsfrei und weist eine sehr hohe Lebensdauer auf. Im Vergleich zu hydraulischen und pneumatischen Stellzylindern sowie zu elektromotorischen und elektromagnetischen Stellantrieben ist der pneumatische Muskel deutlich leichter und auch preisgünstiger herstellbar.

Aufgrund der geschlossenen Bauweise ist der pneumatische Muskel besonders für schwierige Einsatzbedingungen, wie etwa unter Beaufschlagung durch Schmutz und Wasser, geeignet. Da schwerere Nutzfahrzeuge ohnehin mit einer Druckluftanlage versehen sind, kann der Einsatz des pneumatischen Muskels bei diesen Fahrzeugen ohne größeren Aufwand, also besonders einfach und kostengünstig realisiert werden. Das Gittergeflecht, vorzugsweise rautenförmig ausgebildet, kann, wie in der EP 0 161 750 B1 beschrieben, auf der Außenwand des Schlauchkörpers angeordnet sein, oder, wie bei dem pneumatischen Muskel MAS der Fa. Festo, in das Material des Schlauchkörpers eingebettet sein.

Vorteilhafte Ausgestaltungen und Weiterbildungen des jeweiligen Stellantriebs sind in den zugeordneten Unteransprüchen 3 bis 10 angegeben.

Aufgrund seiner großen Stellkraft und seines schnellen Ansprechverhaltens ist der pneumatische Muskel besonders als Kupplungssteller einer als Trockenkupplung ausgebildeten automatisierten Motorkupplung geeignet, die mittels eines Ausrückhebels über ein gegen eine Anpressfeder (Membranfeder) wirksames Ausrücklager betätigt wird. Hierbei ist der pneumatische Muskel zweckmäßig mit im Wesentlichen paralleler Ausrichtung zur Bewegungsrichtung des Ausrücklagers auf der Zugseite des Ausrückhebels angeordnet, mit seinem hebelseitigen Endstück gelenkig mit dem Ausrückhebel verbunden, und mit seinem hebelabgewandten Endstück gehäuseseitig befestigt. Der Stellweg des pneumatischen Muskels erstreckt sich in diesem Fall mit entsprechender Hebelübersetzung zwischen im Ruhezustand vollständig eingerückter und vollständig ausgerückter Reibungskupplung.

Der pneumatische Muskel ist aber ebenso als Gangsteller eines automatisierten Schaltgetriebes, etwa eines Kraftfahrzeuges, geeignet. So kann der pneumatische Muskel, beispielsweise bei einer mittels eines als Schaltgabel oder Schaltschwinge ausgebildeten Schaltelementes und über eine Schaltmuffe betätigbaren sowie zwei Schaltstellungen aufweisenden Schalteinrichtung, mit im Wesentlichen paralleler Ausrichtung zur Bewegungsrichtung der Schaltmuffe bezüglich einer Neutralstellung auf der Zugseite des Schaltelementes angeordnet sein, mit dem elementseitigen Endstück mit dem Schaltelement verbunden und mit dem elementabgewandten Endstück gehäuseseitig befestigt sein.

Somit ist die betreffende Schaltmuffe durch den pneumatischen Muskel zwischen zwei Schaltpositionen, in denen Gang ausgelegt oder eingelegt ist, hin und her schaltbar. Da der pneumatische Muskel ein reines Zugelement darstellt, wird die Rückstellung der Schaltmuffe in die Neutralposition bei drucklos geschaltetem Muskel zweckmäßig von einer Rückstellfeder unterstützt, die als Druckfeder ausgebildet auf derselben Seite des Schaltelementes, oder als Zugfeder ausgebildet auf der gegenüberliegenden Seite des Schaltelementes angeordnet sein kann.

Bei einer entsprechenden Schalteinrichtung mit drei Schaltstellungen ist vorteilhaft beidseitig des Schaltelementes jeweils ein pneumatischer Muskel mit im Wesentlichen paralleler Ausrichtung zur Bewegungsrichtung der Schaltmuffe angeordnet, die jeweils mit dem elementseitigen Endstück mit dem Schaltelement verbunden und mit dem elementabgewandten Endstück gehäuseseitig befestigt sind. Hierbei ist die Schaltmuffe zwischen den Schaltpositionen G1 (erster Gang eingelegt), N (neutral, Gänge ausgelegt) und G2 (zweiter Gang eingelegt) schaltbar, wobei das Auslegen eines Gangs jeweils bei drucklos geschaltetem Muskel (zum Einlegen) zusätzlich zur Federwirkung des betreffenden Schlauchkörpers vorteilhaft durch die Druckbefüllung des gegenüberliegenden Muskels erfolgt, wodurch das Auslegen wesentlich beschleunigt wird.

In einer weiteren bevorzugten Ausführungsform einer mittels einer Schaltschwinge über eine Schaltmuffe betätigbaren und zwei Schaltstellungen aufweisenden Schalteinrichtung, ist die Schaltschwinge starr mit einem im Wesentlichen parallel zur Bewegungsrichtung der Schaltmuffe ausgerichteten und um eine normal dazu ausgerichtete Drehachse schwenkbar gelagerten Kipphebel befestigt.

Der pneumatische Muskel ist in diesem Fall beabstandet von der Drehachse bezüglich einer Neutralstellung auf der Zugseite des Kipphebels mit im Wesentlichen normaler Ausrichtung zur Bewegungsrichtung der Schaltmuffe angeordnet, mit seinem hebelseitigen Endstück gelenkig mit dem Kipphebel verbunden und mit seinem hebelabgewandten Endstück gehäuseseitig befestigt. Die betreffende Schaltmuffe ist durch den pneumatischen Muskel zwischen den Schaltpositionen N (neutral, Gang ausgelegt) und G (Gang eingelegt) hin und her schaltbar, wobei durch eine entsprechende Gestaltung des Hebelverhältnisses zwischen dem Kipphebel und der Schaltschwinge eine gewünschte Kraft- und Wegübersetzung erzielbar ist.

Bei einer entsprechenden Schalteinrichtung mit drei Schaltstellungen und einer ebenfalls starr mit einem im Wesentlichen parallel zur Bewegungsrichtung der Schaltmuffe ausgerichteten und um eine normal bzw. senkrecht dazu ausgerichtete Drehachse schwenkbar gelagerten Kipphebel befestigen Schaltschwinge, ist bevorzugt mit entgegengesetzter Wirkrichtung einander gegenüberliegend jeweils ein pneumatischer Muskel beabstandet von der Drehachse mit im Wesentlichen normaler Ausrichtung zur Bewegungsrichtung der Schaltmuffe angeordnet. Diese pneumatischen Muskeln sind jeweils mit ihrem hebelseitigen Endstück gelenkig mit dem Kipphebel verbunden und mit ihrem hebelabgewandten Endstück gehäuseseitig befestigt.

Hierzu können die beiden pneumatischen Muskeln wahlweise bezüglich der Schaltschwinge auf derselben Seite des Kipphebels und bezüglich der Drehachse an gegenüberliegenden Enden des Kipphebels, also beide auf der der Getriebewelle zugewandten oder abgewandten Seite des Kipphebels, angeordnet sein.

In einer anderen Variante können die beiden pneumatischen Muskeln bezüglich der Schaltschwinge auf einander gegenüberliegenden Seiten des Kipphebels und bezüglich der Drehachse an demselben Ende des Kipphebels, also an einer der Getriebewelle zugewandten und einer der Getriebewelle abgewandten,Seite des Kipphebels, angeordnet sein.

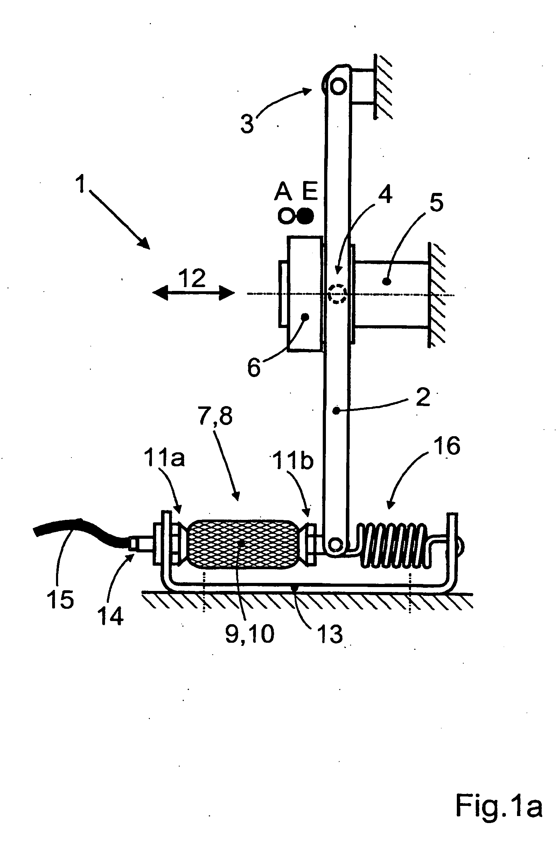

Zur Verdeutlichung der Erfindung sind in acht Zeichnungsfiguren vier verschiedene Ausführungsbeispiele der Erfindung in jeweils zwei Funktionsstellungen dargestellt. In diesen Zeichnungsfiguren zeigt
- Fig. 1a: eine Kupplungsstelleinrichtung bei eingerückter Kupplung in schematischer Darstellung,
- Fig. 1 b: die Kupplungsstelleinrichtung nach Fig. 1 a bei ausgerückter Kupplung,
- Fig. 2a: eine Schalteinrichtung mit zwei Schaitstellungen bei ausgelegtem Gang in schematischer Darstellung,
- Fig. 2b: die Schalteinrichtung nach Fig. 2a bei eingelegtem Gang,
- Fig. 3a: eine erste Schalteinrichtung mit drei Schaltstellungen bei ausgelegten Gängen in schematischer Darstellung,
- Fig. 3b: die Schalteinrichtung nach Fig. 3a bei einem eingelegten Gang,
- Fig. 4a: eine zweite Schalteinrichtung mit drei Schaltstellungen bei ausgelegten Gängen in schematischer Darstellung, und
- Fig. 4b: die Schalteinrichtung nach Fig. 4a bei einem eingelegten Gang.

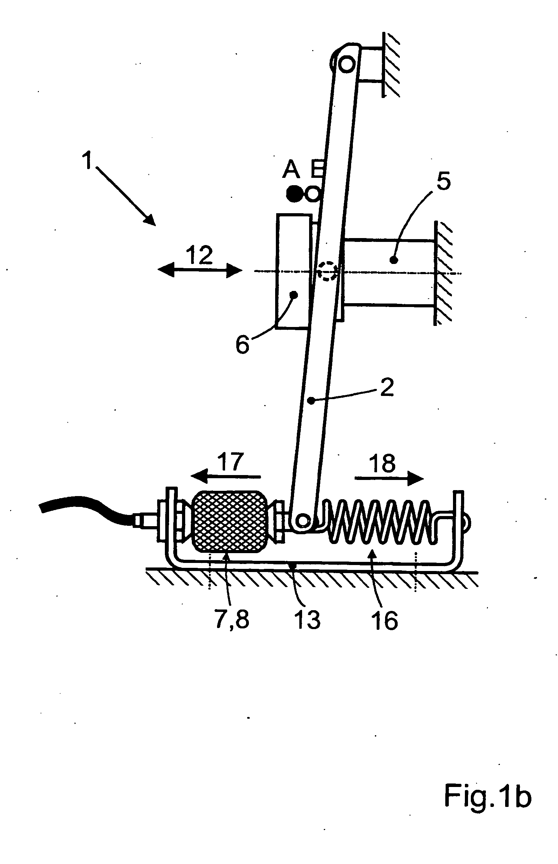

Eine in Fig. 1a und Fig. 1b dargestellte Kupplungsstelleinrichtung 1 einer nicht näher gezeigten Einscheiben-Trockenkupplung mit Membranfeder weist einen Ausrückhebel 2 auf, der endseitig an einem gehäusefesten Schwenklager 3 drehbar gelagert ist, in etwa mittig über zwei radial gegenüberliegend angeordnete Mitnehmerbolzen 4 mit einem auf einer gehäusefesten Führungshülse 5 axial verschiebbar gelagerten Ausrücklager 6 in Eingriff steht, und an seinem gegenüberliegenden Ende mit einem Kupplungssteller 7 in Verbindung ist.

Der Kupplungssteller 7 ist als ein pneumatischer Muskel 8 mit einem elastischen Schlauchkörper 9, mit einem im Außenbereich an dem Schlauchkörper 9 angeordneten rautenförmigen Gittergeflecht 10 aus zugfesten Fasern und mit den Schlauchkörper 9 axial endseitig verschließenden Endstücken 11a, 11 b ausgebildet. Der Muskel 8 ist mit im Wesentlichen paralleler Ausrichtung zur Bewegungsrichtung 12 des Ausrücklagers 6 auf der Zugseite des Ausrückhebels 2 angeordnet, mit dem hebelseitigen Endstück 11 b gelenkig mit dem Ausrückhebel 2 verbunden und mit dem hebelabgewandten Endstück 11 a starr an einem gehäusefest montierten Trägerbauteil 13 befestigt. Das hebelabgewandte Endstück 11 a ist mit einer Armatur 14 zum Anschluss eines Druckschlauches 15 einer Druckluftversorgung versehen. Dem Muskel 8 gegenüberliegend ist eine Zugfeder 16 angeordnet, die einerseits an dem Ausrückhebel 2 und andererseits an dem Trägerbauteil 13 eingehängt ist.

In Fig. 1a ist der stellkraftfreie eingerückte Zustand der Kupplungsstelleinrichtung 1 abgebildet, in dem sich das Ausrücklager 6 in der Ruheposition E befindet, die Membranfeder gespannt ist und die Reibungskupplung somit vollständig eingerückt, also geschlossen ist. Der pneumatische Muskel 8 ist in diesem Zustand drucklos geschaltet.

In Fig. 1b ist der ausgerückte Zustand der Kupplungsstelleinrichtung 1 abgebildet, in dem sich das Ausrücklager in der Ausrückposition A befindet, die Membranfeder entspannt ist und die Reibungskupplung somit vollständig ausgerückt, also geöffnet ist. Hierzu ist der pneumatische Muskel 8 mit einem Druckmittel, insbesondere Druckluft, befüllt worden, wodurch sich der Schlauchkörper 9 radial gedehnt und unter der Wirkung des Gittergeflechts 10 axial verkürzt hat. Dies hat eine axiale Stellkraft 17 zur Folge, die als Ausrückkraft den Ausrückhebel 2 und damit das Ausrücklager 6 gegen die Rückstellkraft der Membranfeder in die Ausrückposition A verschwenkt bzw. verschoben hat. Das Einrücken der Reibungskupplung erfolgt durch das Drucklosschalten des Muskels 8 im Wesentlichen durch die Rückstellkraft der Membranfeder und durch die Rückstellkraft 18 der als Rückstellfeder wirksamen Zugfeder 16.

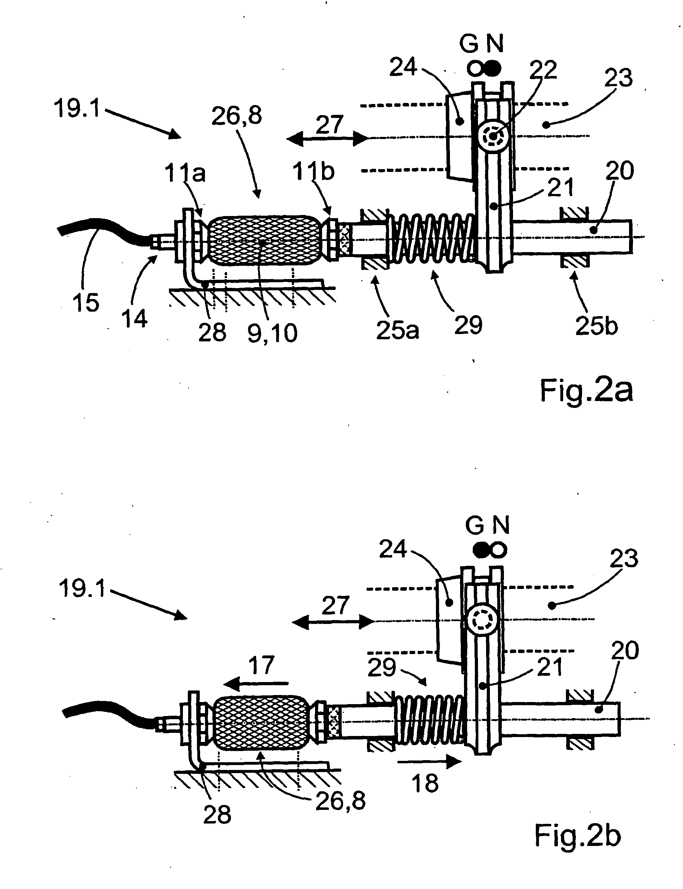

In Fig. 2a und Fig. 2b ist dagegen eine Schalteinrichtung 19.1 eines nicht näher gezeigten Schaltgetriebes dargestellt, die eine starr mit einer Schaltstange 20 verbundene Schaltgabel 21 aufweist. Die Schaltgabel 21 steht über zwei radial gegenüberliegend angeordnete Mitnehmerbolzen 22 mit einer auf einer Getriebewelle 23 axial verschiebbar gelagerten Schaltmuffe 24 in Eingriff, welche die beiden Schaltpositionen N, in der ein zugeordneter Gang ausgelegt ist, und G, in der der betreffende Gang eingelegt ist, aufweist.

Die Schaltstange 20 ist parallel zu der Getriebewelle 23 ausgerichtet und über zwei gehäusefeste Radiallager 25a, 25b axialbeweglich gelagert. Auf der Zugseite der Schaltgabel 21 bezüglich der Neutralposition N der Schaltmuffe 24 ist ein als ein pneumatischer Muskel 8 ausgebildeter Gangsteller 26 angeordnet, der im Wesentlichen parallel zur Bewegungsrichtung 27 der Schaltmuffe 24 ausgerichtet ist, mit dem gabelseitigen Endstück 11 b mit der Schaltstange 20 verbunden ist, und mit dem gabelabgewandten Endstück 11 a starr an einer gehäusefest montierten Halterung 28 befestigt ist. Das gabelabgewandte Endstück 11 a ist mit einer Armatur 14 zum Anschluss eines Druckschlauches 15 einer Druckluftversorgung versehen. Zwischen der Schaltgabel 21 und dem antriebsseitigen Radiallager 25a ist eine Druckfeder 29 auf der Schaltstange 20 angeordnet.

In Fig 2a ist der stellkraftfreie Neutralzustand der Schalteinrichtung 19.1 abgebildet, in dem sich die Schaltmuffe 24 in der Neutralposition N befindet, in der der zugeordnete Gang ausgelegt ist.

In Fig. 2b ist der Schaltzustand der Schalteinrichtung 19.1 abgebildet, in dem sich die Schaltmuffe 24 in der Schaltposition G befindet, in welcher der zugeordnete Gang eingelegt ist. Hierzu ist der pneumatische Muskel 8 durch die Befüllung mit einem Druckmittel, insbesondere Druckluft, aktiviert worden, wodurch unter axialer Verkürzung des Schlauchkörpers 9 eine axiale Stellkraft 17 erzeugt wurde, unter deren Wirkung die Schaltmuffe 24 über die Schaltstange 20 und die Schaltgabel 21 aus der Neutralposition N in die Schaltposition G verschoben und somit der betreffende Gang eingelegt worden ist. Dabei ist auch die Druckfeder 29 gespannt worden. Das Auslegen des Gangs erfolgt durch bei drucklos geschaltetem Muskel 8 im Wesentlichen durch die Rückstellkraft 18 der als Rückstellfeder wirksamen Druckfeder 29.

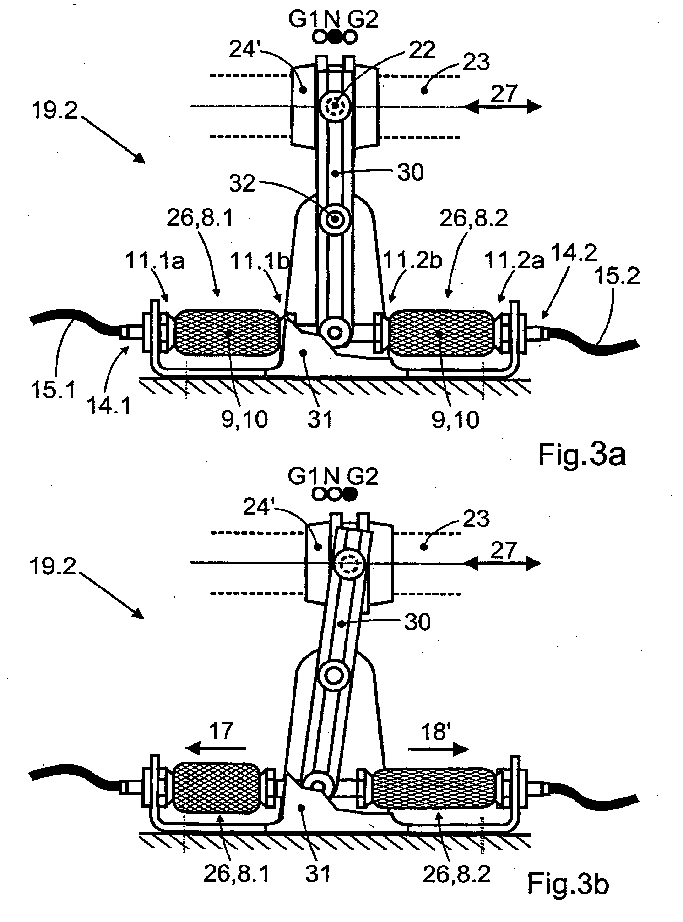

In einer zweiten bevorzugten Ausführungsform gemäß Fig. 3a und Fig. 3b weist eine Schalteinrichtung 19.2 eine Schaltschwinge 30 auf, die in einem gehäusefest montierten Lagerbauteil 31 drehbar um eine normal zu der Bewegungsrichtung 27 einer Schaltmuffe 24' angeordnete Drehachse 32 schwenkbar gelagert ist, über zwei gegenüberliegend angeordnete Mitnehmerbolzen 22 mit der auf der Getriebewelle 23 axial verschiebbar gelagerten Schaltmuffe 24' in Eingriff steht, und gegenüberliegend mit zwei als pneumatische Muskeln 8.1, 8.2 ausgebildete Gangsteller 26 in Verbindung steht.

Die Schaltmuffe 24' weist die drei Schaltpositionen G1, in der ein erster Gang eingelegt ist, G2, in der ein zweiter Gang eingelegt ist, und die mittlere Neutralstellung N, in der die beiden Gänge ausgelegt sind, auf. Die beiden pneumatischen Muskel 8.1 und 8.2 sind beidseitig der Schaltschwinge 30 jeweils mit im Wesentlichen paralleler Ausrichtung zur Bewegungsrichtung 27 der Schaltmuffe 24' derart angeordnet, dass jeweils das schwingenseitige Endstück 11.1 b, 11.2b gelenkig mit der Schaltschwinge 30 verbunden ist, und das schwingenabgewandte Endstück 11.1 a, 11.2a an dem Lagerbauteil 31 befestigt ist. Das schwingenabgewandte Endstück 11.1 a, 11.2a ist jeweils mit einer Armatur 14.1 bzw. 14.2 zum Anschluss eines Druckschlauches 15.1 bzw. 15.2 einer Druckluftversorgung versehen.

In Fig. 3a ist der stellkraftfreie Neutralzustand der Schalteinrichtung 19.2 abgebildet, in dem sich die Schaltmuffe 24' in der Neutralposition N befindet und beide zugeordnete Gänge ausgelegt sind.

In Fig. 3b ist der Schaltzustand der Schalteinrichtung 19.2 abgebildet, in dem sich die Schaltmuffe 24' in der Schaltposition G2 befindet, in welcher der betreffende zweite Gang eingelegt ist. Hierzu ist der diagonal gegenüberliegende pneumatische Muskel 8.1 durch die Befüllung mit Druckluft aktiviert worden, wogegen der andere Muskel 8.2 weiterhin drucklos gehalten ist. Durch die axiale Verkürzung des Schlauchkörpers 9 des gegenüberliegenden Muskels 8.1 wird eine axiale Stellkraft 17 erzeugt, unter deren Wirkung die Schaltmuffe 24' über die Schaltschwinge 30 aus der Neutralposition N in die Schaltposition G2 verschoben und somit der zweite Gang eingelegt worden ist. Dabei ist der andere Muskel 8.2 elastisch gedehnt worden, wodurch eine Rückstellkraft 18' erzeugt worden ist. Das Auslegen des zweiten Gangs kann bei drucklos geschaltetem Muskel 8.1 an sich alleine durch die Rückstellkraft 18' des anderen Muskels 8.2 erfolgen, wird aber zweckmäßig wesentlich schneller durch eine Druckbefüllung dieses Muskels 8.2 bewirkt.

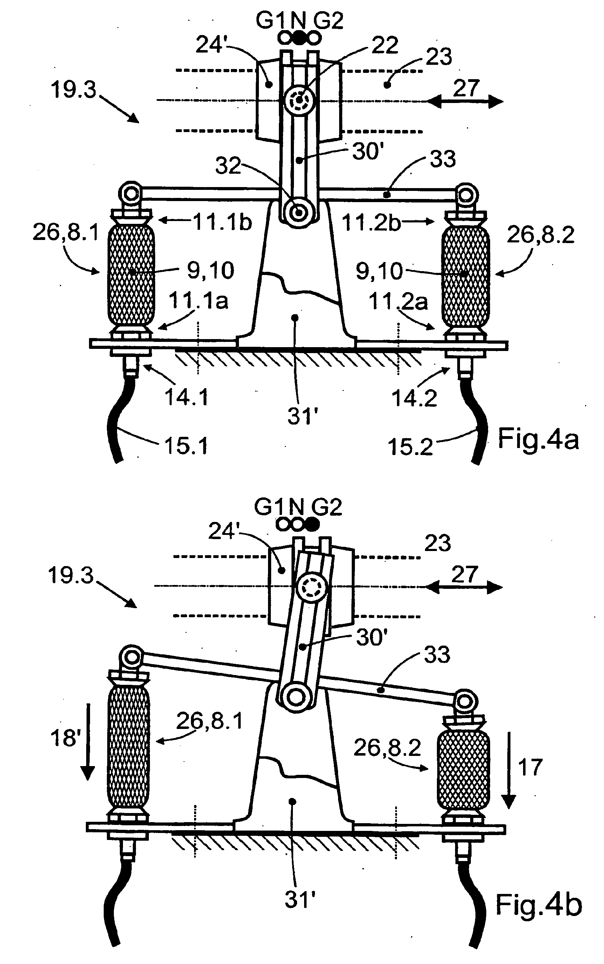

In einer weiteren bevorzugten Ausführungsform einer Schalteinrichtung 19.3 nach Fig. 4a und Fig. 4b ist eine Schaltschwinge 30' starr mit einem Kipphebel 33 verbunden, der im Wesentlichen parallel zur Bewegungsrichtung 27 der drei Schaltpositionen (G1, N, G2) aufweisenden Schaltmuffe 24' ausgerichtet und zusammen mit der Schaltschwinge 30' um eine in etwa mittig angeordnete sowie normal dazu ausgerichtete Drehachse 32 in einem gehäusefest montierten Lagerbauteil 31' schwenkbar gelagert ist.

Der Kipphebel 33 steht an beiden bezüglich der Schaltschwinge 30' einander gegenüberliegenden Enden jeweils mit einem als pneumatischer Muskel 8.1, 8.2 ausgebildeten Gangsteller 26 in Verbindung, wobei die Muskeln 8.1 und 8.2 jeweils im Wesentlichen senkrecht zur Bewegungsrichtung 27 der Schaltmuffe 24' ausgerichtet sind und mit ihrem hebelseitigen Endstück 11.1b, 11.2b gelenkig mit dem Kipphebel 33 sowie mit ihrem hebelabgewandten Endstück 11.1 a und 11.2a an dem Lagerbauteil 31' befestigt sind. Das hebelabgewandte Endstück 11.1 a bzw. 11.2a ist jeweils mit einer Armatur 14.1 bzw. 14.2 zum Anschluss eines Druckschlauches 15.1, 15.2 einer Druckluftversorgung versehen.

In Fig. 4a ist der stellkraftfreie Neutralzustand der Schalteinrichtung 19.3 abgebildet, in dem sich die Schaltmuffe 24' in der Neutralposition N befindet und beide zugeordnete Gänge ausgelegt sind.

In Fig. 4b ist der Schaltzustand der Schalteinrichtung 19.3 abgebildet, in dem sich die Schaltmuffe 24' in der Schaltposition G2 befindet, in welcher der zweite Gang eingelegt ist. Hierzu ist nunmehr der auf der Seite der Schaltposition G2 angeordnete pneumatische Muskel 8.2 durch die Befüllung mit Druckluft aktiviert worden, wogegen der andere Muskel 8.1 weiterhin drucklos gehalten ist. Durch die axiale Verkürzung des Schlauchkörpers 9 des betreffenden Muskels 8.2 wird eine axiale Stellkraft 17 erzeugt, unter deren Wirkung die Schaltmuffe 24' über den Kipphebel 33 und die Schaltschwinge 30' aus der Neutralposition N in die Schaltposition G2 verschoben und somit der zweite Gang eingelegt worden ist. Dabei ist der andere Muskel 8.1 elastisch gedehnt worden, wodurch eine Rückstellkraft 18' erzeugt worden ist. Das Auslegen des zweiten Gangs kann bei drucklos geschaltetem Muskel 8.2 an sich durch die Rückstellkraft 18' des anderen Muskels 8.1 erfolgen, wird aber zweckmäßig im Wesentlichen über eine Druckbefüllung dieses Muskels 8.1 gesteuert.

### Bezugszeichen

- 1: Kupplungsstelleinrichtung
- 2: Ausrückhebel
- 3: Schwenklager
- 4: Mitnehmerbolzen
- 5: Führungshülse
- 6: Ausrücklager
- 7: Kupplungssteller
- 8: Pneumatischer Muskel
- 8.1: Pneumatischer Muskel
- 8.2: Pneumatischer Muskel
- 9: Schlauchkörper
- 10: Gittergeflecht
- 11 a: Endstück
- 11.1 a: Endstück
- 11.2a: Endstück
- 11 b: Endstück
- 11.1 b: Endstück
- 11.2b: Endstück
- 12: Bewegungsrichtung (von 6)
- 13: Trägerbauteil
- 14: Armatur
- 14.1: Armatur
- 14.2: Armatur
- 15: Druckschlauch
- 15.1: Druckschlauch
- 15.2: Druckschlauch
- 16: Zugfeder
- 17: Axiale Stellkraft (von 8, 8.1, 8.2)
- 18: Rückstellkraft (von 16, 29)
- 18': Rückstellkraft (von 8.1, 8.2)
- 19.1: Schalteinrichtung
- 19.2: Schalteinrichtung
- 19.3: Schalteinrichtung
- 20: Schaltstange
- 21: Schaltgabel
- 22: Mitnehmerbolzen
- 23: Getriebewelle
- 24: Schaltmuffe
- 24': Schaltmuffe
- 25a: Radiallager
- 25b: Radiallager
- 26: Gangsteller
- 27: Bewegungsrichtung (von 24, 24')
- 28: Halterung
- 29: Druckfeder
- 30: Schaltschwinge
- 30': Schaltschwinge
- 31: Lagerbauteil
- 31': Lagerbauteil
- 32: Drehachse
- 33: Kipphebel
- A: Stellposition (von 6; Kupplung ausgerückt)
- E: Stellposition (von 6; Kupplung eingerückt)
- G: Schaltposition (von 24; Gang eingelegt)
- G1: Schaltposition (von 24'; erster Gang eingelegt)
- G2: Schaltposition (von 24'; zweiter Gang eingelegt)
- N: Schaltposition (von 24, 24'; Gang/Gänge ausgelegt)

## Patentansprüche

1. Automatisiertes Schaltgetriebe mit mindestens einem steuerbaren Stellantrieb, der als Gangsteller (26) zum Ein- und Auslegen einer Gangstufe des Schaltgetriebes oder als Kupplungssteller (7) zum Ein- und Ausrücken einer zugeordneten automatisierten Motorkupplung vorgesehen ist, **dadurch gekennzeichnet, dass** der Stellantrieb (7, 26) als ein pneumatischer Muskel (8) mit einem Schlauchkörper (9) aus einem fluidisch dichten und elastischen Material, mit einem im Außenbereich an dem Schlauchkörper (9) angeordneten Gittergeflecht (10) aus zugfesten Fasern, und mit den Schlauchkörper (9) axial endseitig verschließenden Endstücken (11 a, 11 b) ausgebildet ist.

2. Automatisierte Reibungskupplung mit einem steuerbaren Stellantrieb, der als Kupplungssteller (7) zum Ein- und Ausrücken der Reibungskupplung vorgesehen ist, **dadurch gekennzeichnet, dass** der Stellantrieb als ein pneumatischer Muskel (8) mit einem Schlauchkörper (9) aus einem fluidisch dichten und elastischen Material, mit einem im Außenbereich an dem Schlauchkörper (9) angeordneten Gittergeflecht (10) aus zugfesten Fasern, und mit den Schlauchkörper (9) axial endseitig verschließenden Endstücken (11 a, 11 b) ausgebildet ist.

3. Automatisierte Reibungskopplung nach Anspruch 2, **dadurch gekennzeichnet, dass** bei einer als Trockenkupplung ausgebildeten und mittels eines Ausrückhebels (2) über ein Ausrücklager (6) betätigbaren Motorkupplung der pneumatische Muskel (8) mit im Wesentlichen paralleler Ausrichtung zur Bewegungsrichtung (12) des Ausrücklagers (6) auf der Zugseite des Ausrückhebels (2) angeordnet ist, mit dem hebelseitigen Endstück (11 b) gelenkig mit dem Ausrückhebel (2) verbunden ist, und mit dem hebelabgewandten (11a) Endstück gehäuseseitig befestigt ist.

4. Automatisiertes Schaltgetriebe nach Anspruch 1, **dadurch gekennzeichnet, dass** bei einer, mittels eines als Schaltgabel (21) oder Schaltschwinge (30) ausgebildeten Schaltelementes sowie über eine Schaltmuffe (24) betätigbaren und zwei Schaltstellungen (G, N) aufweisenden Schalteinrichtung (19.1), der pneumatische Muskel (8) mit im Wesentlichen paralleler Ausrichtung zur Bewegungsrichtung (27) der Schaltmuffe (24) bezüglich einer Neutralstellung auf der Zugseite des Schaltelemerites angeordnet ist, mit dem elementseitigen Endstück (11 b) mit dem Schaltelement verbunden ist, und mit dem elementabgewandten Endstück (11a) gehäuseseitig befestigt ist.

5. Automatisiertes Schaltgetriebe nach Anspruch 1, **dadurch gekennzeichnet, dass** bei einer, mittels eines als Schaltgabel (21) oder Schaltschwinge (30) ausgebildeten Schaltelementes sowie über eine Schaltmuffe (24') betätigbaren und drei Schaltstellungen (G1, N, G2) aufweisenden Schalteinrichtung (19.2) beidseitig des Schaltelementes jeweils ein pneumatischer Muskel (8.1, 8.2) mit im Wesentlichen paralleler Ausrichtung zur Bewegungsrichtung (27) der Schaltmuffe (24') angeordnet ist, der jeweils mit dem elementseitigen Endstück (11.1 b) mit dem Schaltelement verbunden ist, und mit dem elementabgewandten Endstück (11.1 a) gehäuseseitig befestigt ist.

6. Automatisiertes Schaltgetriebe nach Anspruch 1, **dadurch gekennzeichnet, dass** bei einer, mittels einer Schaltschwinge (30') über eine Schaltmuffe (24') betätigbaren und drei Schaltstellungen (G1, N, G2) aufweisenden Schalteinrichtung die Schaltschwinge (30') starr mit einem im Wesentlichen parallel zur Bewegungsrichtung (27) der Schaltmuffe (24') ausgerichteten und um eine senkrecht dazu ausgerichtete Drehachse (32) schwenkbar gelagerten Kipphebel (33) befestigt ist, und der pneumatische Muskel (8.1) beabstandet von der Drehachse (32) bezüglich einer Neutralstellung (N) auf der Zugseite des Kipphebels (33) mit im Wesentlichen senkrechter Ausrichtung zur Bewegungsrichtung (27) der Schaltmuffe (24') angeordnet ist, mit dem hebelseitigen Endstück (11 b) gelenkig mit dem Kipphebel (33) verbunden ist, und mit dem hebelabgewandten (11 a) Endstück gehäuseseitig befestigt ist.

7. Automatisiertes Schaltgetriebe nach Anspruch 1, **dadurch gekennzeichnet, dass** bei einer, mittels einer Schaltschwinge (30') über eine Schaltmuffe (24') betätigbaren und drei Schaltstellungen (G1, N, G2) aufweisenden Schalteinrichtung (19.3) die Schaltschwinge (30') starr mit einem im Wesentlichen parallel zur Bewegungsrichtung (27) der Schaltmuffe (24') ausgerichteten und um eine senkrecht dazu ausgerichtete Drehachse (32) schwenkbar gelagerten Kipphebel (33) befestigt ist, und mit entgegengesetzter Wirkrichtung einander gegenüberliegend jeweils ein pneumatischer Muskel (8.1, 8.2) beabstandet von der Drehachse (32) mit im Wesentlichen senkrechter Ausrichtung zur Bewegungsrichtung (27) der Schaltmuffe (24') angeordnet ist, der jeweils mit dem hebelseitigen Endstück (11.1b, 11.2b) gelenkig mit dem Kipphebel (33) verbunden ist und mit dem hebelabgewandten (11.1a, 11.2a) Endstück gehäuseseitig befestigt ist.

8. Automatisiertes Schaltgetriebe nach Anspruch 7, **dadurch gekennzeichnet, dass** die pneumatischen Muskel (8.1, 8.2) bezüglich der Schaltschwinge (30') auf derselben Seite des Kipphebels (33) und bezüglich der Drehachse (32) an gegenüberliegenden Enden des Kipphebels (33) angeordnet sind.

9. Automatisiertes Schaltgetriebe nach Anspruch 7, **dadurch gekennzeichnet, dass** die pneumatischen Muskel (8.1, 8.2) bezüglich der Schaltschwinge (30') auf einander gegenüberliegenden Seiten des Kipphebels (33) und bezüglich der Drehachse (32) an demselben Ende des Kipphebels (33) angeordnet sind.

10. Automatisiertes Schaltgetriebe nach einem der Ansprüche 4 bis 9, **dadurch gekennzeichnet, dass** das mit dem pneumatischen Muskel (8, 8.1, 8.2) verbundene Stellelement jeweils mit einer Rückstellfeder (16, 29) zur selbsttätigen Rückstellung in eine Neutralposition (N) in Verbindung steht.

## Claims

1. Automated shift transmission with at least one controllable actuating drive which is provided as a gear actuator (26) for selecting and deselecting a gear step of the shift transmission or as a clutch actuator (7) for engaging and disengaging an assigned automated engine clutch, **characterized in that** the actuating drive (7, 26) is designed as a pneumatic muscle (8) with a hose body (9) consisting of a fluidically leaktight and elastic material, with an interlaced meshwork (10) arranged in the outer region on the hose body (9) and consisting of tension-resistant fibres, and with end pieces (11a, 11b) closing off the hose body (9) axially on the end faces.

2. Automated friction clutch with a controllable actuating drive which is provided as a clutch actuator (7) for engaging and disengaging the friction clutch, **characterized in that** the actuating drive is designed as a pneumatic muscle (8) with a hose body (9) consisting of a fluidically leaktight and elastic material, with an interlaced meshwork (10) arranged in the outer region on the hose body (9) and consisting of tension-resistant fibres, and with end pieces (11a, 11b) closing off the hose body (9) axially on the end faces.

3. Automated friction clutch according to Claim 2, **characterized in that,** in the case of an engine clutch designed as a dry clutch and actuable by means of a disengaging lever (2) via a disengaging bearing (6), the pneumatic muscle (8) is arranged, with an orientation essentially parallel to the direction of movement (12) of the disengaging bearing (6), on the tension side of the disengaging lever (2), is connected to the disengaging lever (2) in an articulated manner by means of the lever-side end piece (11b) and is fastened on the housing side by means of the end piece (11a) facing away from the lever.

4. Automated shift transmission according to Claim 1, **characterized in that,** in the case of a shift device (19.1) which is actuable by means of a shift element designed as a shift fork (21) or shift rocker (30) and via a shift sleeve (24) and has two shift positions (G, N), the pneumatic muscle (8) is arranged, with an orientation essentially parallel to the direction of movement (27) of the shift sleeve (24), on the tension side of the shift element in respect of a neutral position, is connected to the shift element by means of the element-side end piece (11b) and is fastened on the housing side by means of the end piece (11a) facing away from the element.

5. Automated shift transmission according to Claim 1, **characterized in that,** in the case of a shift device (19.2) which is actuable by means of a shift element designed as a shift fork (21) or shift rocker (30) and via a shift sleeve (24') and has three shift positions (G1, N, G2), a pneumatic muscle (8.1, 8.2) is arranged, with an orientation essentially parallel to the direction of movement (27) of the shift sleeve (24'), on each of the two sides of the shift element, is connected to the shift element in each case by means of the element-side end piece (11.1b) and is fastened on the housing side by means of the end piece (11.1a) facing away from the element.

6. Automated shift transmission according to Claim 1, **characterized in that,** in the case of a shift device actuable by means of a shift rocker (30') via a shift sleeve (24') and having three shift positions (G1, N, G2), the shift rocker (30') is fastened rigidly to a rocker lever (33) oriented essentially parallel to the direction of movement (27) of the shift sleeve (24') and mounted pivotably about an axis of rotation (32) oriented perpendicularly thereto, and the pneumatic muscle (8.1) is arranged, with respect to a neutral position (N), spaced apart from the axis of rotation (32), with an orientation essentially perpendicular to the direction of movement (27) of the shift sleeve (24'), on the tension side of the rocker lever (33), is connected to the rocker lever (33) in an articulated manner by means of the lever-side end piece (11b) and is fastened on the housing side by means of the end piece (11a) facing away from the lever.

7. Automated shift transmission according to Claim 1, **characterized in that,** in the case of a shift device (19.3) actuable by means of a shift rocker (30') via a shift sleeve (24') and having three shift positions (G1, N, G2), the shift rocker (30') is fastened rigidly to a rocker lever (33) oriented essentially parallel to the direction of movement (27) of the shift sleeve (24') and mounted pivotably about an axis of rotation (32) oriented perpendicularly thereto, and in each case a pneumatic muscle (8.1, 8.2), each lying opposite the other with an opposite direction of action, is arranged spaced apart from the axis of rotation (32), the orientation being essentially perpendicular to the direction of movement (27) of the shift sleeve (24'), is connected in each case to the rocker lever (33) in an articulated manner by means of the lever-side end piece (11.1b, 11.2b) and is fastened on the housing side by means of the end piece (11.1a, 11.2a) facing away from the lever.

8. Automated shift transmission according to Claim 7, **characterized in that** the pneumatic muscles (8.1, 8.2) are arranged on the same side of the rocker lever (33) with respect to the shift rocker (30') at opposite ends of the rocker lever (33) with respect to the axis of rotation (32).

9. Automated shift transmission according to Claim 7, **characterized in that** the pneumatic muscles (8.1, 8.2) are arranged on mutually opposite sides of the rocker lever (33) with respect to the shift rocker (30') and at the same end of the rocker lever (33) with respect to the axis of rotation (32).

10. Automated shift transmission according to one of Claims 4 to 9, **characterized in that** the actuating element connected to the pneumatic muscle (8, 8.1, 8.2) is connected in each case to a return spring (16, 29) for automatic return into a neutral position (N).

## Revendications

1. Transmission automatisée comprenant au moins une commande de réglage commandable, qui est prévue en tant que dispositif de sélection de vitesse (26) pour enclencher ou désenclencher un rapport de vitesse de la transmission ou en tant que dispositif de réglage d'embrayage (7) pour embrayer et débrayer un embrayage de moteur automatisé associé, **caractérisée en ce que** la commande de réglage (7, 26) est réalisée sous forme de muscle pneumatique (8) avec un corps de tuyau (9) en matériau élastique et étanche aux fluides, avec un treillis à mailles (10) en fibres résistant à la traction, disposé dans la région extérieure sur le corps de tuyau (9), et avec des embouts (11a, 11b) fermant le corps de tuyau (9) aux extrémités axiales.

2. Embrayage à friction automatisé comprenant une commande de réglage commandable, qui est prévue en tant que dispositif de réglage d'embrayage (7) pour embrayer et débrayer l'embrayage à friction, **caractérisé en ce que** la commande de réglage est réalisée sous forme de muscle pneumatique (8) avec un corps de tuyau (9) en matériau élastique et étanche aux fluides, avec un treillis à mailles (10) en fibres résistant à la traction, disposé dans la région extérieure sur le corps de tuyau (9), et avec des embouts (11a, 11b) fermant le corps de tuyau (9) aux extrémités axiales.

3. Embrayage à friction automatisé selon la revendication 2, **caractérisé en ce que** dans le cas d'un embrayage de moteur réalisé sous forme d'embrayage sec et pouvant être actionné au moyen d'un levier de débrayage (2) par le biais d'un palier de débrayage (6), le muscle pneumatique (8) est disposé avec une orientation essentiellement parallèle à la direction de déplacement (12) du palier de débrayage (6) du côté de traction du levier de débrayage (2), est connecté de manière articulé au levier de débrayage (2) avec l'embout (11b) du côté du levier, et est fixé du côté du boîtier avec l'embout opposé au levier (11a).

4. Transmission automatisée selon la revendication 1, **caractérisée en ce que** dans le cas d'un dispositif de changement de vitesse (19.1) pouvant être actionné au moyen d'un élément de sélection réalisé en tant que fourchette de sélection (21) ou en tant que fourchette de changement de vitesse (30) et par le biais d'un manchon de sélection (24) et présentant deux positions de sélection (G, N), le muscle pneumatique (8) est disposé avec une orientation essentiellement parallèle au sens de déplacement (27) du manchon de sélection (24) par rapport à une position neutre sur le côté traction de l'élément de sélection, est connecté à l'élément de sélection avec l'embout (11b) du côté de l'élément et est fixé du côté du boîtier avec l'embout (11a) opposé à l'élément.

5. Transmission automatisée selon la revendication 1, **caractérisée en ce que** dans le cas d'un dispositif de changement de vitesse (19.2) pouvant être actionné au moyen d'un élément de sélection réalisé en tant que fourchette de sélection (21) ou en tant que fourchette de changement de vitesse (30) et par le biais d'un manchon de sélection (24') et présentant trois positions de sélection (G1, N, G2), un muscle pneumatique (8.1, 8.2) de chaque côté de l'élément de sélection est disposé avec une orientation essentiellement parallèle au sens de déplacement (27) du manchon de sélection (24'), qui est connecté à l'élément de sélection à chaque fois au niveau de l'embout (11.1b) du côté de l'élément, et qui est fixé du côté du boîtier avec l'embout (11.1a) opposé à l'élément.

6. Transmission automatisée selon la revendication 1, **caractérisée en ce que** dans le cas d'un dispositif de changement de vitesse pouvant être actionné au moyen d'une fourchette de changement de vitesse (30') par le biais d'un manchon de sélection (24') et présentant trois positions de sélection (G1, N, G2), la fourchette de changement de vitesse (30') est fixée rigidement à un levier de basculement (33) orienté essentiellement parallèlement au sens de déplacement (27) du manchon de sélection (24'), et monté de manière à pouvoir pivoter autour d'un axe de pivotement (32) orienté perpendiculairement à celui-ci, et le muscle pneumatique (8.1) est disposé à distance de l'axe de pivotement (32), par rapport à une position neutre (N), du côté de traction du levier de basculement (33), avec une orientation essentiellement perpendiculaire au sens de déplacement (27) du manchon de sélection (24'), est connecté de manière articulée au levier basculant (33) avec l'embout (11b) du côté du levier, et est fixé du côté du boîtier avec l'embout (11a) du côté opposé au levier.

7. Transmission automatisée selon la revendication 1, **caractérisée en ce que** dans le cas d'un dispositif de changement de vitesse (19.3) pouvant être actionné au moyen d'une fourchette de changement de vitesse (30') par le biais d'un manchon de sélection (24') et présentant trois positions de sélection (G1, N, G2), la fourchette de changement de vitesse (30') est fixée rigidement à un levier de basculement (33) orienté essentiellement parallèlement au sens de déplacement (27) du manchon de sélection (24'), et monté de manière à pouvoir pivoter autour d'un axe de pivotement (32) orienté perpendiculairement à celui-ci, et à chaque fois un muscle pneumatique (8.1, 8.2) respectif, agissant chacun dans une direction d'action opposée en regard l'un de l'autre, sont disposés avec une orientation essentiellement perpendiculaire au sens de déplacement (27) du manchon de sélection (24'), qui est connecté de manière articulée au levier de basculement (33) à chaque fois au niveau de l'embout (11.1b, 11.2b) respectif du côté du levier, et qui est fixé du côté du boîtier avec l'embout (11.1a, 11.2a) opposé au levier.

8. Transmission automatisée selon la revendication 7, **caractérisée en ce que** les muscles pneumatiques (8.1, 8.2) sont disposés par rapport à la fourchette de changement de vitesse (30') du même côté du levier de basculement (33) et par rapport à l'axe de pivotement (32) à des extrémités opposées du levier de basculement (33).

9. Transmission automatisée selon la revendication 7, **caractérisée en ce que** les muscles pneumatiques (8.1, 8.2) sont disposés par rapport à la fourchette de changement de vitesse (30') sur des côtés mutuellement opposés du levier de basculement (33), et par rapport à l'axe de pivotement (32), sur la même extrémité du levier de basculement (33).

10. Transmission automatisée selon l'une quelconque des revendications 4 à 9, **caractérisée en ce que** l'élément de réglage connecté au muscle pneumatique (8, 8.1, 8.2) est à chaque fois en liaison avec un ressort de rappel (16, 29) pour le rappel automatique dans une position neutre (N).
